# EUROPEAN PATENT APPLICATION

(11) **EP 3 094 013 A1**
(43) Date of publication of application: **16.11.2016**
(21) Application number: 14878261.8
(22) Date of filing: 30.06.2014
(51) Int. Cl.: H04B 7/155

(54) **SATELLITE COMMUNICATION SYSTEM**

(30) Priority: 08.01.2014 JP 2014001766
(71) Applicant: Kabushiki Kaisha Toshiba, Minato-ku Tokyo 105-8001 (JP)
(72) Inventor: MOCHIDA, Yuichiro, Tokyo 105-8001 (JP)
(74) Representative: Hoffmann Eitle
(86) International application number: PCT/JP2014/067444
(87) International publication number: WO 2015/104861

(57) **Abstract**

A satellite communication system according to an embodiment includes an outdoor device installed outdoors, an indoor device installed indoors, and an electronic device. The outdoor device has an antenna to transmit/receive wireless radio signals to/from a communication satellite. The indoor device transmits a reception level of the wireless radio signals which are received via the antenna. The electronic device receives the reception level from the indoor device and displays, on a display, a guiding screen to identify an installation position and an installation direction of the antenna in such a way that a synchronization signal based on the received wireless radio signals is confirmed.

## Description

### FIELD

Embodiments of the present invention relate to a satellite communication system.

### BACKGROUND

Conventionally, there has been known a satellite communication system that includes an outdoor device, which has an antenna to transmit/receive wireless radio signals to/from a communication satellite, and an indoor device, which performs modulation and demodulation with respect to the wireless radio signals received via the antenna. At the time of installing such a satellite communication system, it is necessary to have at least two workers, namely, a worker, who is stationed at the indoor device to confirm the reception level of the received wireless radio signals at the indoor device, and a worker, who is stationed at the outdoor device to adjust the position and the direction of the antenna while communicating with the worker at the indoor device so as to ensure that a synchronization signal based on the received wireless radio signals is confirmed at the indoor device. In that regard, in order to reduce the number of workers involved in the installation of a satellite communication system, there has been proposed a technology in which the reception level of the received wireless radio signals is sent in a wireless manner from the indoor device to the outdoor device.

### CITATION LIST

### Patent Literature

Patent Literature 1: Japanese Laid-open Patent Publication No. 2003-101467

### SUMMARY OF THE INVENTION

### Problem to be Solved by the Invention

In the technology mentioned above, it is desirable to be able to easily identify the installation position and the installation direction of the antenna used in the confirmation of a synchronization signal.

### Means for Solving Problem

A satellite communication system according to an embodiment comprises an outdoor device installed outdoors, an indoor device installed indoors, and an electronic device. The outdoor device comprises an antenna to transmit/receive wireless radio signals to/from a communication satellite. The indoor device transmits a reception level of the wireless radio signals which are received via the antenna. The electronic device receives the reception level from the indoor device and displays, on a display, a guiding screen to identify an installation position and an installation direction of the antenna in such a way that a synchronization signal based on the received wireless radio signals is confirmed.

### BRIEF DESCRIPTION OF DRAWINGS

FIG. 1 is a block diagram illustrating one example of an overall configuration of a satellite communication system according to an embodiment.
FIG. 2 is a block diagram illustrating one example of an internal configuration of a display terminal according to the embodiment.
FIG. 3 is a block diagram illustrating one example of a functional configuration of a controller of the display terminal according to the embodiment.
FIG. 4 is a diagram illustrating one example of a registration screen displayed on the display terminal according to the embodiment.
FIG. 5 is a diagram illustrating one example of a first guiding screen displayed on the display terminal according to the embodiment.
FIG. 6 is a diagram illustrating one example of a second guiding screen displayed on the display terminal according to the embodiment.
FIG. 7 is a diagram illustrating one example of a second guiding screen displayed on the display terminal according to the embodiment.
FIG. 8 is a flowchart illustrating one example of a processing flow performed when the first guiding screen is displayed on the display terminal according to the embodiment.
FIG. 9 is a flowchart illustrating one example of a processing flow performed when the second guiding screen is displayed on the display terminal according to the embodiment.

### DETAILED DESCRIPTION

An embodiment is described below with reference to the accompanying drawings.

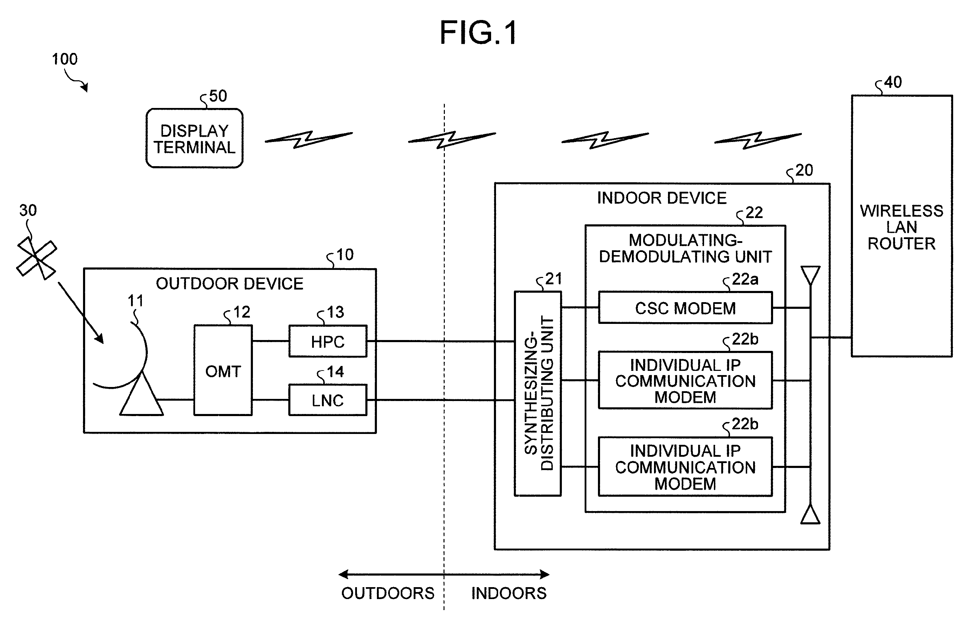

Firstly, explained with reference to FIG. 1 is one example of a configuration of a satellite communication system 100 according to the embodiment.

As illustrated in FIG. 1, the satellite communication system 100 includes an outdoor device 10 installed outdoors and an indoor device 20 installed indoors. This satellite communication system 100 is installed at various locations of the earth in a dispersed manner.

The outdoor device 10 mainly includes a parabolic antenna 11, an OMT (Ortho Mode Transducer) 12, an HPC (High Power Converter) 13, and an LNC (Low Noise Converter) 14. The indoor device 20 mainly includes a synthesizing-distributing unit 21 and a modulating-demodulating unit 22.

The parabolic antenna 11 is installed to transmit/receive wireless radio signals to/from a communication satellite 30. For example, the parabolic antenna 11 receives CSC (Common Signalling Channel) signals. A CSC signal represents a control signal that is sent from a central control station (not illustrated), which controls a plurality of satellite communication systems 100 installed at various locations, via the communication satellite 30.

The OMT 12 is configured to separate wireless radio signals, which are received via the parabolic antenna 11, into vertically-polarized waves and horizontally-polarized waves. The HPC 13 is configured to up-convert the signals output from the indoor device 20 into a frequency suitable for satellite communication, and to output the up-converted signals as transmission signals to the OMT 12. The LNC 14 is configured to down-convert the received signals output from the OMT 12, and to output the down-converted signals to the indoor device 20. The HPC 13 and the LNC 14 also function as amplifiers to amplify the transmission signals and the received signals, respectively.

The synthesizing-distributing unit 21 is configured to synthesize/distribute the transmission signals and the received signals. The modulating-demodulating unit 22 is configured to modulate/demodulate the transmission signals and the received signals. More particularly, the modulating-demodulating unit 22 includes a CSC modem 22a and two individual IP (Internet Protocol) communication modems 22b. The CSC modem 22a is a modulating/demodulating device to modulate/demodulate CSC signals. The individual IP communication modems 22b are modulating/demodulating devices to modulate/demodulate general data signals other than CSC signals. Meanwhile, although the explanation with reference to FIG. 1 is given about an example in which there are two individual IP communication modems 22b, it is possible to have only one individual IP communication modem 22b or to have three or more individual IP communication modems 22b.

In the embodiment, a wireless LAN (Local Area Network) router 40 is connected to the indoor device 20. The indoor device 20 is configured to transmit, via the wireless LAN router 40, reception level information indicating the strength of the reception level of a CSC signal input to the CSC modem 22a and synchronization information indicating whether or not a synchronization signal based on the CSC signal is confirmed in the CSC modem 22a.

Moreover, in the embodiment, the satellite communication system 100 includes a display terminal 50 such as a tablet or a portable computer. The display terminal 50 is one example of an "electronic device". The display terminal 50 is configured to be capable of receiving the reception level information and the synchronization information sent from the indoor device 20 via the wireless LAN router 40.

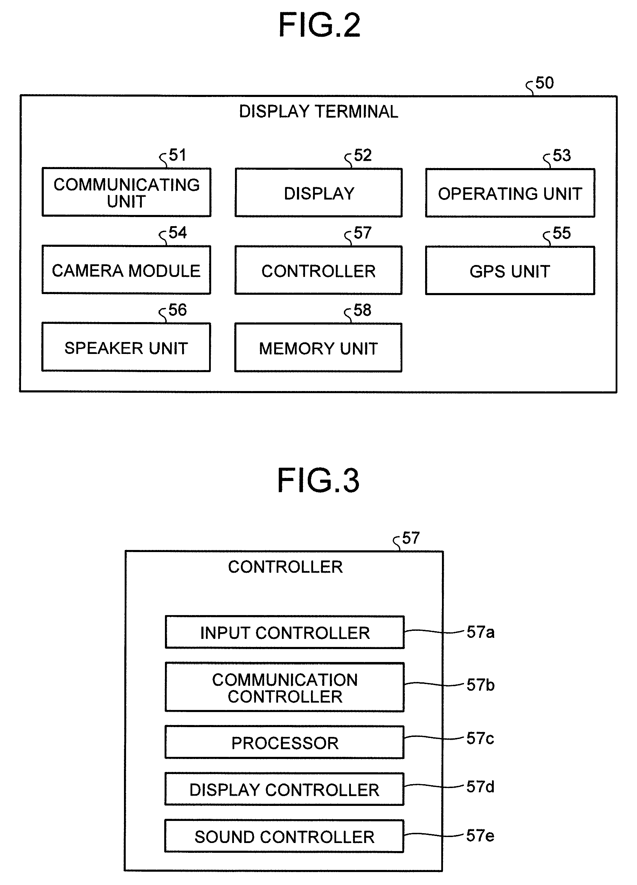

Given below with reference to FIG. 2 is the specific explanation of one example of an internal configuration of the display terminal 50.

As illustrated in FIG. 2, the display terminal 50 includes a communicating unit 51, a display 52, an operating unit 53, a camera module 54, a GPS (Global Positioning System) unit 55, a speaker unit 56, a controller 57, and a memory unit 58. Herein, the speaker unit 56 is one example of a "sound output unit".

The communicating unit 51 is an interface to perform wireless communication with the wireless LAN router 40. The display 52 is configured with an LCD (Liquid Crystal Display) or an organic EL (Electro luminescence) display. The operating unit 53 is configured with a touch-sensitive panel using the display 52.

The camera module 54 is a device to take (capture) camera images (photographs). The GPS unit 55 is a device to obtain information on the current position of the display terminal 50 using artificial satellites. The speaker unit 56 is a device to output sounds.

The controller 57 is configured to execute computer programs such as an OS (Operating System) and various application programs, and to control the operations of each component of the display terminal 50. These computer programs are stored in the memory unit 58.

In the embodiment, the display terminal 50 is configured to be usable as a guide for installing the parabolic antenna 11 at the optimum position and in the optimum direction. Herein, the optimum position and the optimum direction imply such a position and such a direction in which there are no obstacles up to the communication satellite 30 and in which a synchronization signal based on a CSC signal is confirmed in the CSC modem 22a.

The guiding function mentioned above can be implemented when the controller 57 reads and executes an application program (hereinafter, called a guiding program) stored in the memory unit 58. Thus, at a position in the vicinity of the outdoor device 10, if a worker operates the display terminal 50 and calls the guiding program, he or she can identify a suitable installation position and a suitable installation direction for the parabolic antenna 11.

Given below with reference to FIGS. 3 to 7 is specific explanation about one example of a functional configuration of the controller 57 to execute the guiding program and about one example of screens displayed on the display 52 in response to the execution of the guiding program.

As illustrated in FIG. 3, the controller 57 mainly includes, as the functional configuration, an input controller 57a, a communication controller 57b, a processor 57c, a display controller 57d, and a sound controller 57e.

The input controller 57a is configured to accept input of user operations from the operating unit 53. The communication controller 57b is configured to control the communicating unit 51 and to obtain the reception level information and the synchronization information from the indoor device 20. The processor 57c is configured to perform a variety of processing to control each component of the display terminal 50.

The display controller 57d is configured to control the display of a variety of information on the display 52. The sound controller 57e is configured to control the sound output via the speaker unit 56.

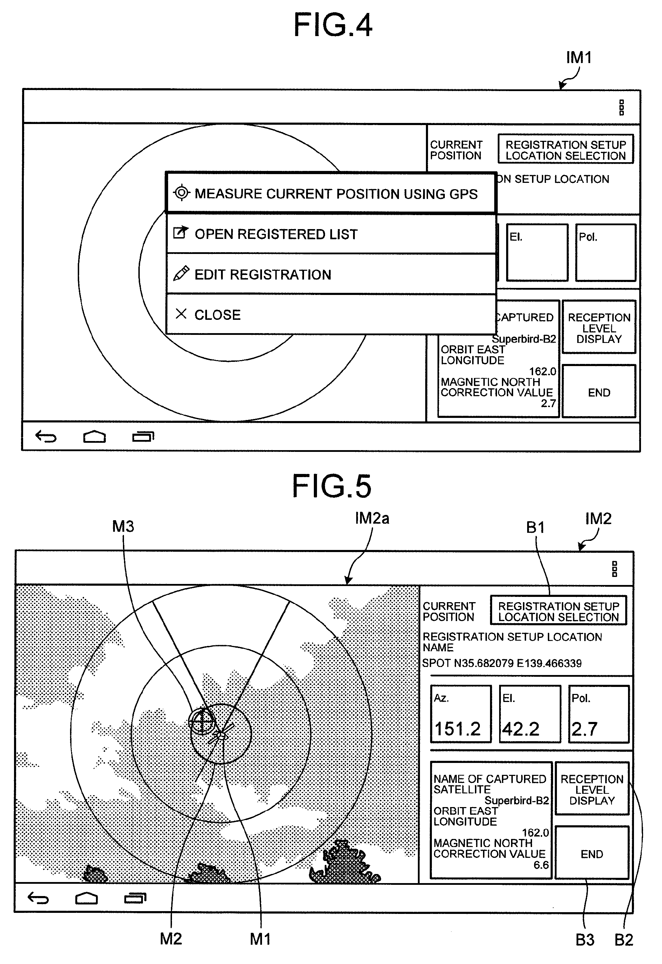

In the embodiment, when the guiding program is called, the display controller 57d is configured to firstly display a registration screen IM1, which is illustrated in FIG. 4, on the display 52. The registration screen IM1 is used to register the current position of the display terminal 50. Prior to installing the parabolic antenna 11, the worker firstly calls the guiding program at the outdoor location that is planned for the installation of the parabolic antenna 11 and registers the current position of the display terminal 50 in the registration screen IM1. Regarding the method of registering the current position, it is possible to think of a method of automatically measuring the current position using the GPS unit 55 or a method of selecting, from a plurality of sets of position information registered in advance, a single set of position information that is close to the current position.

When the current position is registered in the registration screen IM1, the display controller 57d performs control to display a first guiding screen IM2 as illustrated in FIG. 5 on the display 52. The first guiding screen IM2 functions as a guide to identify the installation position and an approximate installation direction of the parabolic antenna 11. As illustrated in FIG. 5, a camera image IM2a is displayed in the first guiding screen IM2, and a first mark M1, a second mark M2 and a third mark M3 which are displayed on the camera image IM2a are also displayed in the first guiding screen IM2.

The camera image IM2a is an image taken by the camera module 54. The first mark M1 is a mark that indicates the relative position of the communication satellite 30 with respect to the display terminal 50 and that is calculated by the processor 57c. The first mark M1 is configured to move on the camera image IM2a according to the position of the display terminal 50 and the orientation of the camera module 54.

The second mark M2 is a mark that is fixedly displayed on the camera image IM2a as a moving target for the first mark M1. In the embodiment, when the second mark M2 and the first mark M1 overlap with each other on the camera image IM2a, the position of the display terminal 50 represents a target installation position of the parabolic antenna 11 and the orientation of the camera module 54 represents an approximate target installation direction of the parabolic antenna 11.

Thus, in the embodiment, in order to find the installation position and the approximate installation direction of the parabolic antenna 11, the worker firstly holds the display terminal 50, on which the first guiding screen IM2 is displayed, up in the air and varies the position and the orientation of the display terminal 50 in such a way that the first mark M1 is positioned on the inside of the circular second mark M2. The worker performs this task while looking at the camera image IM2a and confirming the presence or absence of any obstacles up to the communication satellite 30. At timing when the first mark M1 can be positioned on the inside of the second mark M2 in a state of no obstacles up to the communication satellite 30, the worker installs the parabolic antenna 11 at the position of the display terminal 50 at the timing and in the same direction as the orientation of the display terminal 50 (the camera module 54) at the timing. In this way, the worker can identify the installation position and the installation direction of the parabolic antenna 11 to be suitable for satellite communication without any obstacles up to the communication satellite 30.

Meanwhile, similarly to the first mark M1, the third mark M3 is configured to move on the camera image IM2a according to the orientation of the camera module 54. The third mark M3 is used to perform further minute adjustments in the direction of the parabolic antenna 11 that has been installed at the position and in the direction having no obstacles up to the communication satellite 30 as described earlier. In the embodiment, when the third mark M3 and the second mark M2 overlap with each other on the camera image IM2a, the orientation of the camera module 54 represents a precise target installation direction of the parabolic antenna 11.

Thus, in the embodiment, after the first mark M1 can be positioned on the inside of the second mark M2, the worker further varies the orientation of the display terminal 50 in such a way that the third mark M3 is positioned on the inside of the second mark M2. At timing when the third mark M3 can be positioned on the inside of the second mark M2, the worker adjusts the installation direction of the parabolic antenna 11 so that the parabolic antenna 11 is oriented in the same direction as the orientation of the display terminal 50 (the camera module 54) at the timing. In this way, the worker can identify such an installation direction of the parabolic antenna 11 which is suitable for satellite communication without any obstacles up to the communication satellite 30 and in which a synchronization signal is confirmed in the CSC modem 22a.

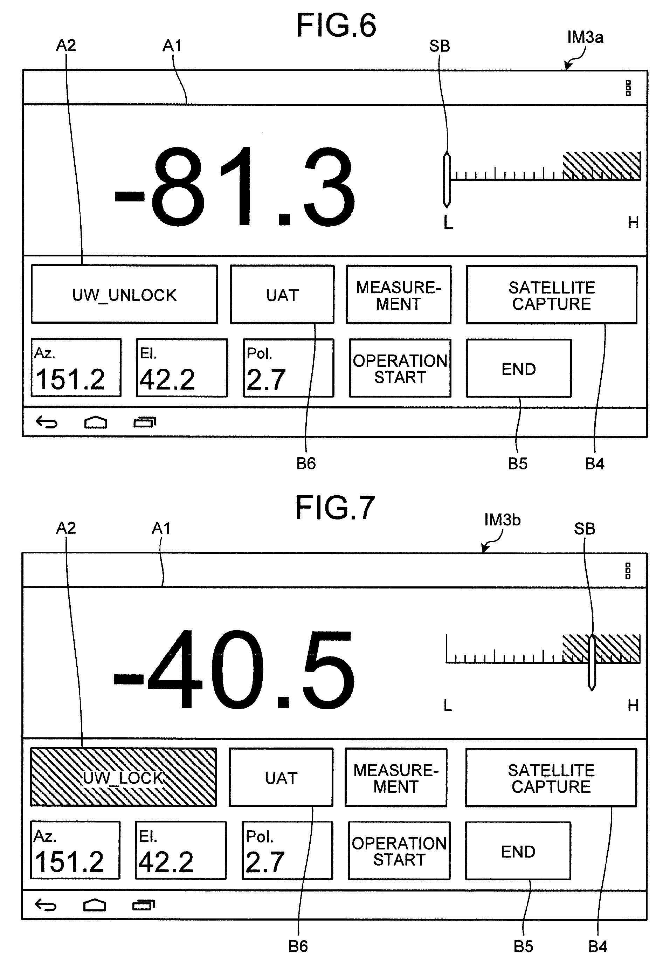

In the explanation given above, although the first guiding screen IM2, in which the third mark M3 is displayed, is used, another first guiding screen (not illustrated), in which the third mark M3 is not displayed, can also be used, in the embodiment. In this case, the minute adjustments in the direction of the parabolic antenna 11 can be performed using second guiding screens IM3a and IM3b described later (see FIG. 6 and FIG. 7).

In the first guiding screen IM2 illustrated in FIG. 5, in addition to the camera image IM2a being displayed, an angle of orientation (Az.: Azimuth Angle), an angle of elevation (El.: Elevation Angle), and a polarization angle (Pol.: Polarization Angle) indicating the position of the communication satellite 30 are also displayed. Moreover, in the first guiding screen IM2 illustrated in FIG. 5, buttons B1 to B3 explained below are also displayed. The button B1 is a button used to switch the display screen from the first guiding screen IM2 to the registration screen IM1 (see FIG. 4). The button B2 is a button used to switch the display screen from the first guiding screen IM2 to the second guiding screens IM3a and IM3b described later (see FIG. 6 and FIG. 7). The button B3 is a button used to end the guiding program.

When an operation of pressing (touching) the button B2 is performed on the first guiding screen IM2, the display controller 57d performs control to display the second guiding screen IM3a illustrated in FIG. 6 (or the second guiding screen IM3b illustrated in FIG. 7) on the display 52. The second guiding screen IM3a (IM3b) functions as a guide to identify the precise installation direction of the parabolic antenna 11.

In the embodiment, as illustrated in FIG. 6 and FIG. 7, in the second guiding screens IM3a and IM3b, the reception level information indicating the strength of the reception level of the CSC signal as obtained by the communication controller 57b is displayed along with synchronization information indicating whether or not a synchronization signal based on the CSC signal is confirmed.

In FIG. 6 and FIG. 7, the reception level information is expressed using a numerical value displayed within an area A1 of the second guiding screen IM3a (IM3b) and using a slide bar SB that slides on a scale displayed on the right-hand side of the numerical value. Moreover, in FIG. 6 and FIG. 7, the synchronization information is expressed using a character string displayed within an area A2 of the second guiding screen IM3a (IM3b). More particularly, a character string "UW_UNLOCK", which is displayed within the area A2 of the second guiding screen IM3a illustrated in FIG. 6, indicates that no synchronization signal is confirmed yet (indicates that synchronization is not completed yet). On the other hand, a character string "UW_LOCK", which is displayed within the area A2 of the second guiding screen IM3b illustrated in FIG. 7, indicates that a synchronization signal has been confirmed (indicates that synchronization is completed).

The display contents in the areas A1 and A2 change according to the installation direction of the parabolic antenna 11. Thus, in the embodiment, when the second guiding screen IM3a illustrated in FIG. 6 is displayed on the display terminal 50, the worker varies the direction of the parabolic antenna 11 while looking at the second guiding screen IM3a and finds such an installation direction of the parabolic antenna 11 in which the numerical value displayed within the area A1 increases further. Then, at timing when the second guiding screen IM3b illustrated in FIG. 7 is displayed on the display terminal 50 (at the point of time when the character string in the area A2 changes from "UW_UNLOCK" illustrated in FIG. 6 to "UW_LOCK" illustrated in FIG. 7), the worker stops the task of adjusting the direction of the parabolic antenna 11. In this way, the worker can identify such an installation direction for the parabolic antenna 11 which has a strong reception level, which enables confirmation of a synchronization signal, and which is optimum for satellite communication.

Meanwhile, in the embodiment, as illustrated in FIG. 6 and FIG. 7, the angle of orientation (AZ.), the angle of elevation (El.), and the polarization angle (Pol.) indicating the position of the communication satellite 30 are displayed also in the second guiding screens IM3a and IM3b similarly to the first guiding screen IM2 (see FIG. 5). Moreover, as illustrated in FIG. 6 and FIG. 7, buttons B4 to B6 explained below are displayed in the second guiding screens IM3a and IM3b. The button B4 is a button used to switch the display screen from the second guiding screens IM3a and IM3b to the first guiding screen IM2 (see FIG. 5). The button B5 is a button used to end the guiding program. The button B6 is a button used to start an uplink access test (UAT).

The uplink access test is a test to confirm whether or not data can be normally transmitted via the communication satellite 30. In this test, sometimes the setting of the indoor device 20 is changed as may be necessary. In this case, in the embodiment, the display terminal 50 is configured to be usable as a setting unit to perform various settings with respect to the indoor device 20 during the uplink access text.

Thus, in the embodiment, when an operation of pressing (touching) the button B6 is performed on the second guiding screen IM3a or the second guiding screen IM3b, the display controller 57d is configured to perform control to display, on the display 52, a setting screen (not illustrated) to perform various settings with respect to the indoor device 20. Using this setting screen, the worker can remotely perform various settings with respect to the indoor device 20 that are required during the uplink access test.

Meanwhile, in the embodiment, when a guiding screen (the first guiding screen IM2, the second guiding screen IM3a, or the second guiding screen IM3b) is displayed on the display 52, if a synchronization signal is confirmed in the CSC modem 22a, then the sound controller 57e is configured to perform control to output, via the speaker unit 56, a sound (a first-type sound) notifying the confirmation of a synchronization signal. Moreover, when a guiding screen is displayed on the display 52, the sound controller 57e is configured to perform control to output, via the speaker unit 56, a sound (a second-type sound) according to the strength of the reception level. As a result, by checking the guiding screen displayed on the display 52 and by checking the sound output from the speaker unit 56; the worker can easily identify, visually and aurally, such a direction of the parabolic antenna 11 which has a strong reception level, which enables confirmation of a synchronization signal, and which is optimum for satellite communication.

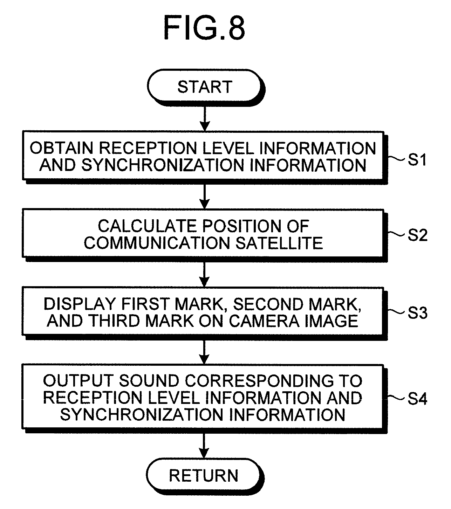

Explained below with reference to FIG. 8 is one example of processing flow performed by the functional modules of the controller 57 (see FIG. 3) when the first guiding screen IM2 (see FIG. 5) is displayed on the display 52 of the display terminal 50 according to the embodiment.

In this processing flow, as illustrated in FIG. 8, firstly, at Step S1, the communication controller 57b performs processing to obtain the reception level information and the synchronization information transmitted from the indoor device 20. Then, the processing proceeds to Step S2.

Subsequently, at Step S2, based on information of the current position of the display terminal 50 as registered via the registration screen IM1 (see FIG. 4), the processor 57c performs processing to calculate the relative position of the communication satellite 30 with respect to the display terminal 50. Then, the processing proceeds to Step S3.

Subsequently, at Step S3, the display controller 57d performs processing to display the first mark M1, the second mark M2, and the third mark M3 on the camera image IM2a in the first guiding screen IM2. Then, the processing proceeds to Step S4.

Subsequently, at Step S4, the sound controller 57e performs processing to output a sound, which corresponds to the reception level information and the synchronization information obtained at Step S1, from the speaker unit 56. Then, the processing returns.

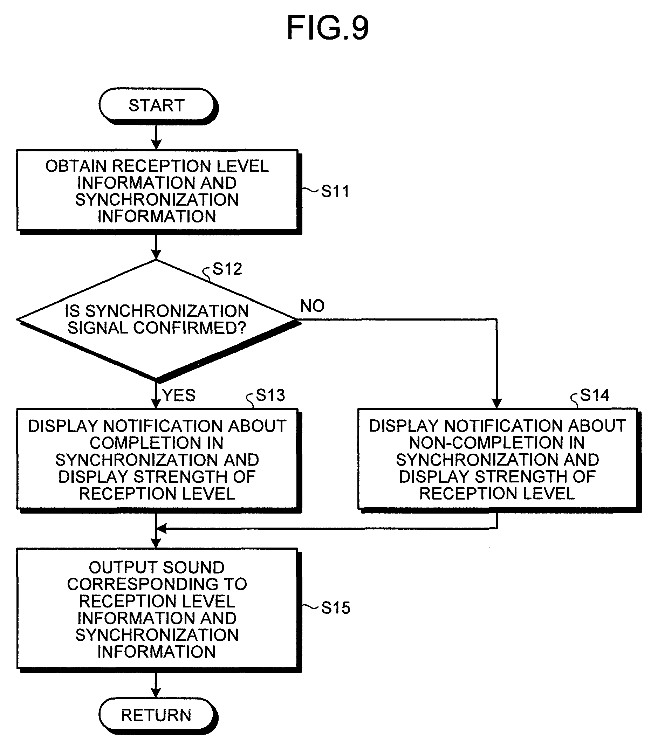

Explained below with reference to FIG. 9 is one example of a processing flow performed by the functional modules of the controller 57 (see FIG. 3) when the second guiding screens IM3a and IM3b (see FIG. 6 and FIG. 7) are displayed on the display 52 of the display terminal 50 according to the embodiment.

In this processing flow, as illustrated in FIG. 9, firstly, at Step S11, the communication controller 57b performs processing to obtain the reception level information and the synchronization information transmitted from the indoor device 20. Then, the processing proceeds to Step S12.

Subsequently, at Step S12, based on the synchronization information obtained at Step S11, the processor 57c performs processing to determine whether or not a synchronization signal is confirmed.

At Step S12, when a synchronization signal is confirmed, the processing proceeds to Step S13. Then, at Step S13, the display controller 57d performs processing to display a notification about completion in synchronization (see the area A2 in FIG. 7) and the strength of the reception level (see the area A1 in FIG. 7) on the second guiding screen IM3b (see FIG. 7).

On the other hand, at Step S12, when no synchronization signal is confirmed, the processing proceeds to Step S14. Then, at Step S14, the display controller 57d performs processing to display a notification about non-completion in synchronization (see the area A2 in FIG. 6) and the strength of the reception level (see the area A1 in FIG. 6) on the second guiding screen IM3a (see FIG. 6).

When the processing at Step S13 or Step S14 is performed, the processing proceeds to Step S15. At Step S15, the sound controller 57e performs processing to output a sound, which corresponds to the reception level information and the synchronization information obtained at Step S11, from the speaker unit 56. Then, the processing returns.

As described above, in the embodiment, the display terminal 50 is configured: to receive the reception level of a CSC signal from the indoor device 20; and to display on the display 52 a guiding screen (the first guiding screen IM2, the second guiding screen IM3a, or the third guiding screen IM3b) to identify such an installation position and an installation direction of the parabolic antenna in which a synchronization signal based on the CSC signal is confirmed. Hence, using the guiding screen, the worker can easily identify such an installation position and an installation direction of the parabolic antenna in which a synchronization signal is confirmed.

While a certain embodiment of the invention has been described, the embodiment has been presented by way of example only, and is not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A satellite communication system comprising:
an outdoor device that comprises an antenna to transmit/receive wireless radio signals to/from a communication satellite, and that is installed outdoors;
an indoor device that transmits a reception level of the wireless radio signals which are received via the antenna, and that is installed indoors; and
an electronic device that receives the reception level from the indoor device and that displays, on a display, a guiding screen to identify an installation position and an installation direction of the antenna in such a way that a synchronization signal based on the received wireless radio signals is confirmed.

2. The satellite communication system according to claim 1, wherein
the guiding screen comprises a first guiding screen in which a camera image, a first mark, and a second mark are displayed, the camera image being obtained by a camera installed in the electronic device, the first mark being configured to move on the camera image according to a position of the electronic device and an orientation of the camera and configured to indicate relative position of the communication satellite with respect to the electronic device, the second mark being fixedly displayed on the camera image as a moving target for the first mark, and
when the first mark and the second mark overlap with each other on the camera image, the position of the electronic device represents a target installation position of the antenna and the orientation of the camera represents an approximate target installation direction of the antenna.

3. The satellite communication system according to claim 2, wherein
a third mark is further displayed in the first guiding screen, the third mark being configured to move on the camera image according to orientation of the camera, and
when the third mark and the second mark overlap with each other on the camera image, the orientation of the camera represents a precise target installation direction of the antenna.

4. The satellite communication system according to claim 1, wherein the guiding screen comprises a second guiding screen in which reception signal information and synchronization information is displayed, the reception signal information indicating strength of the reception level, the synchronization information indicating whether or not the synchronization signal is confirmed.

5. The satellite communication system according to claim 1, wherein, when the synchronization signal is confirmed, the electronic device outputs a first-type sound as a notification via a sound output unit.

6. The satellite communication system according to claim 5, wherein the electronic device further outputs a second-type sound according to strength of the reception level via the sound output unit.

7. The satellite communication system according to claim 1, wherein the electronic device can be used as a setting unit to perform various settings with respect to the indoor device during an uplink access test.
